# EUROPEAN PATENT SPECIFICATION

(11) **EP 3 881 531 B1**
(45) Date of publication and mention of the grant of the patent: **20.09.2023**
(21) Application number: 19779904.2
(22) Date of filing: 03.10.2019
(51) Int. Cl.: H04N 7/18, H04M 1/02, H04M 11/02

(54) **INTERNAL UNIT FOR DOOR PHONE OR VIDEO DOOR PHONE SYSTEMS, WITH VOICE ASSISTANT FUNCTIONS**
INTERNE EINHEIT FÜR TÜRSPRECH- ODER VIDEOTÜRSPRECHANLAGEN MIT SPRACHASSISTENTFUNKTIONEN
UNITÉ INTERNE POUR SYSTÈMES DE PORTIER PHONIQUE OU DE PORTIER PHONIQUE VIDÉO, AVEC DES FONCTIONS D'ASSISTANCE VOCALE

(30) Priority: 13.11.2018 IT 201800010269
(43) Date of publication of application: 22.09.2021
(73) Proprietor: Urmet S.p.A., 10154 Torino (IT)
(72) Inventor: MINARELLI, Giorgio, 10060 Pragelato (IT)
(74) Representative: Modiano, Micaela Nadia
(86) International application number: PCT/EP2019/076808
(87) International publication number: WO 2020/099022

(56) References cited:
- US-A1- 2006 078 102
- US-A1- 2014 125 754
- US-A1- 2017 289 359
- US-B2- 9 779 593

## Description

The present invention relates to an internal unit for door phone or video door phone systems, with voice assistant functions.

In the field of domotics and the "smart home", in recent years various electronic devices, commonly known as "voice assistants", have been developed which are capable of receiving oral queries or instructions and of supplying oral answers or performing commands (for example, making online bookings or purchases, playing back audio files, etc.). Some of these devices are further provided with a display, for example, for playing back images, recorded videos or real-time video. In some cases, these devices are also capable of controlling, again via voice command, other "smart" devices in the house, for example lighting or heating systems, electronic locks and so forth, typically via wireless technology communication standards, such as Zigbee^{®}, Z-Wave^{®} and the like.

Conventional voice assistance devices are typically enclosed in a freestanding loudspeaker enclosure, which can have various shapes or dimensions as a function of the integrated components and of aesthetic considerations.

They include, as main components:
- at least one microphone;
- at least one loudspeaker;
- an IP communication interface (wired or wireless) for connection to the internet;
- a microprocessor programmed to sample the audio signal of the microphone and transmit it to a dedicated server on the internet, which converts the audio into text and processes it, as well as to receive from the same server audio streams in digital format, convert them to analog format, and play them back via an amplifier in the loudspeaker.

Moreover, as already mentioned, voice assistance devices can include a display for playing back static images and/or videos.

The server on the internet converts the audio file to text via a natural language processing (NLP) software layer, with the aid of a speech-to-text (STT) conversion module. The text thus obtained, parsed into words, is interpreted via software so as to define the action to be performed.

Depending on the action to be performed, the server on the internet can:
- locally generate an answer in text format, convert it to a digital audio file and send the latter to the voice assistance device for its playback;
- consult another site in order to obtain the answer and send it to the voice assistance device in the same ways cited above;
- generate a command and send it to another site, which will manage the received command (for example, to control "smart" devices in the house, as in the examples mentioned previously).

Moreover, as mentioned, if the voice assistance device is provided with a display, it is possible to play back thereon streams of images in digital format originating from the internet.

Such devices can be provided with an internal or external power supply connected to the electric mains via a power cord provided with a standard plug according to the country in which the device is distributed.

A drawback of conventional voice assistance devices such as the ones mentioned above is that they have a limited audio reception range: usually, for example, it is not possible to query a device that is in a different room or, even more so, on a different floor, even though it is in the same dwelling.

In order to solve this drawback, some systems allow the installation of multiple voice assistance devices in the same dwelling. In these cases, the microprocessors of the various devices are programmed to automatically identify the device nearest to the user and enable it to answer, while the other devices are inhibited.

The multiplication of devices, however, entails problems of space occupation and untidiness generated by the power supply cables.

Moreover, the currently known devices have not been found to be satisfactory in terms of security because they are vulnerable to potential eavesdropping attempts performed remotely via computer hacking.

This limitation has also hampered attempts to integrate the functions of voice assistants in various home systems, particularly in door phone or video door phone systems.

In this regard, currently only video cameras for video door phone systems which are capable of communicating with voice assistants (typically by utilizing the WiFi network of the apartment) and, through them, receiving instructions orally and performing simple functions within the range of capabilities of the video door phone system (for example, deactivating the doorbell, recording the images acquired by the video camera and/or taking pictures, so that those images and/or photographs can be displayed on the optional display, etc., are known.

US 9 779 593 B2 discloses a hands-free intercom system comprising a microphone and automatically communicating with either a remote communication device in a computer network or with a mobile.US 2014/125754 A1 discloses an internal intercom base unit. The base unit can be used as a standard intercom by pressing a button switch to establish audio communication between the remote unit and the base unit. The base unit may automatically start dialing a telephone number if the button is not pressed within a predetermined time interval from the activation of an external switch.

The aim of the present invention is now to provide an internal unit for door phone or video door phone systems that integrates all the functions of conventional voice assistants and is at the same time more secure in relation to possible eavesdropping attempts.

This aim and these and other objects which will become better apparent hereinafter are achieved by an internal unit for door phone or video door phone systems having the characteristics described in claim 1, while the dependent claims define other advantageous, albeit secondary, characteristics of the invention.

The invention is now described in greater detail, with reference to a preferred but not exclusive embodiment thereof, illustrated by way of nonlimiting example in the accompanying drawings, wherein:
Figure 1 is a perspective view of an internal video door phone unit according to the invention;
Figure 2 is a circuit diagram of the internal video door phone unit according to the invention.

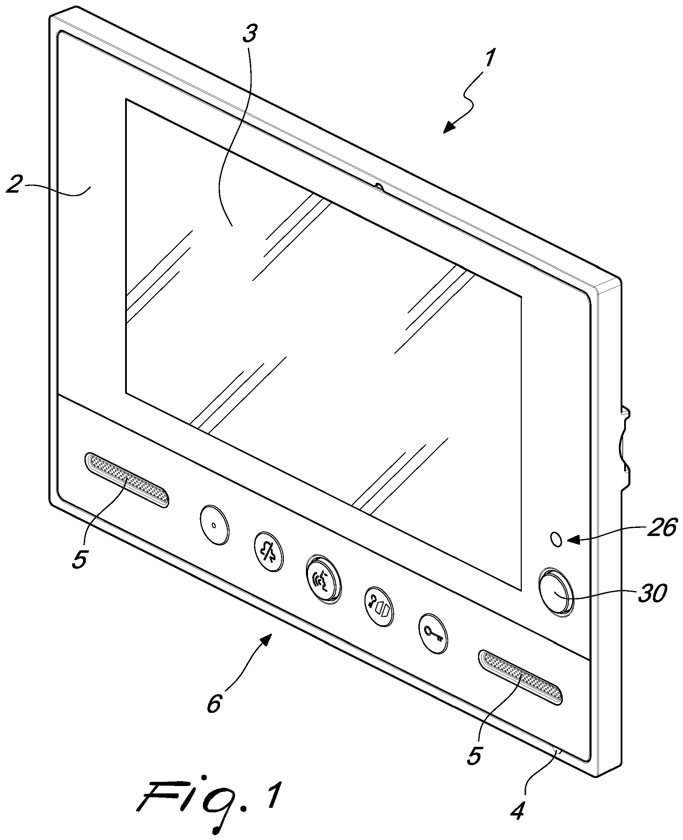

With initial reference to Figure 1, an internal video door phone unit, or monitor, 1 comprises a box-like support 2 which accommodates a display 3, a microphone 4, a pair of loudspeakers 5, and a keypad 6 for conventional functions such as beginning/ending a conversation, opening the main entrance door, opening the gate, call muting, and placing a call to a switchboard.

As an alternative to the physical keypad 6, the display 3 could be of the touchscreen type for greater versatility.

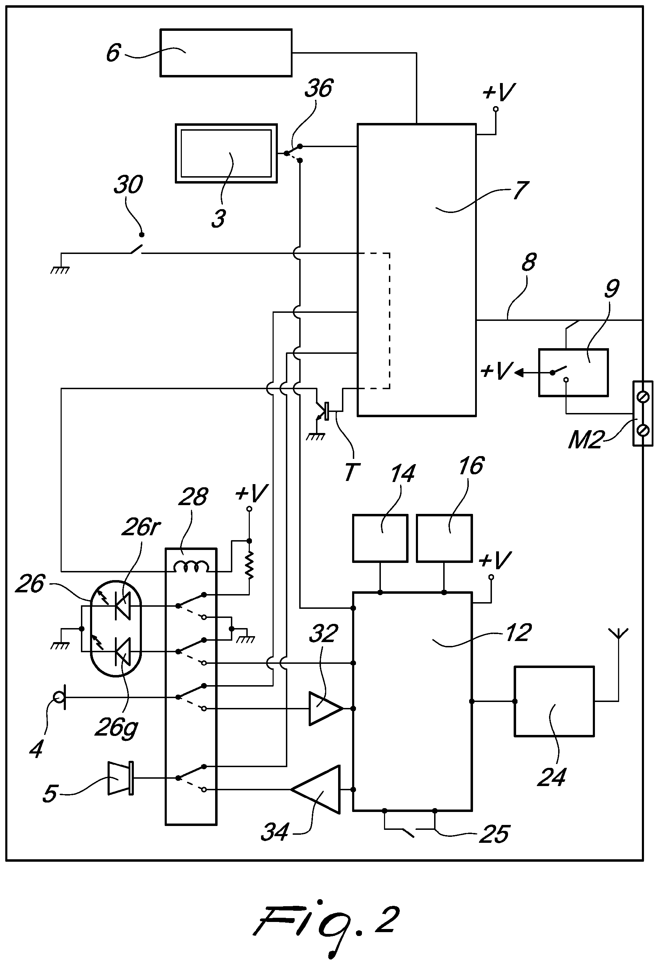

With reference now to the circuit diagram of Figure 2, the display 3 and the keypad 6 are controlled by processing means which, in the embodiment described here, comprise a first microprocessor 7. The first microprocessor 7 is connected to the video door phone system riser via a bus 8, for example, a two-wire or multi-wire bus, from which it advantageously also draws the power supply. Preferably, there is also an auxiliary power supply block 9 which can be connected to the domestic power supply via a power supply terminal strip M2.

It should be noted that as an alternative to the connection via bus mentioned above, the monitor 1 can use other conventional connection means, including for example an Ethernet connection if the video door phone system is of the type based on the IP protocol (Internet Protocol).

In a manner that is known per se, the monitor 1 is designed to communicate bidirectionally, via the bus 8, with an external unit of the video door phone system which is provided with call buttons, a microphone, a loudspeaker, and a video camera. The external unit is not described or shown here, since it lies outside the aim and objects of the present invention and can be of a per se conventional type.

The monitor 1 according to the invention incorporates a voice assistant system. For this purpose, the processing means comprise a second microprocessor 12 with which a flash memory 14, a RAM memory 16, a wireless local network (WLAN) communication interface 24 for connection to a computer network typically connected to the internet, as well as a reset switch 25, are associated.

The monitor 1 is further provided with a signaling two-color LED 26, provided with a first diode 26r, for example red, and a second diode 26g, for example green, which are connected in parallel.

The signaling two-color LED 26, the microphone 4 and the loudspeakers 5 are controlled by a relay 28 that can be switched, via a button 30 connected to the first microprocessor 7 (in the manner that will be described in greater detail hereinafter), between:
- a first position or "video door phone" mode (position indicated by a solid line in Figure 2), in which the microphone 4 and the loudspeaker 5 are connected to the first microprocessor 7, the first diode 26r is connected to the power supply so as to emit a steady red light, and the second diode 26g is inhibited from switching on; and
- a second position, which corresponds to a "voice assistant" mode (position indicated with a dashed line in Figure 2), in which the microphone 4 and the loudspeakers 5 are connected to the second microprocessor 12 via respective amplifiers 32 and 34, the second diode 26g is also connected to the second microprocessor 12 so as to be able to emit, on command of the latter, a steady or flashing green light, while the first diode 26r is inhibited from switching on.

In this example of embodiment, the first microprocessor 7 is programmed to activate the voice assistant mode when the user presses and holds the button 30, with the relay 28 being switched through being driven by a transistor T.

As an alternative, the voice assistant mode could be activated by pressing the button 30 briefly, and then could be deactivated upon the subsequent pressing. In such case, it is advantageously possible to provide a protection timeout that automatically deactivates the voice assistant mode after a preset time, thus avoiding the risk that the microphone 4 might remain inadvertently connected to the network.

In a manner that is known per se, and which therefore is not discussed in detail in the present description, the second microprocessor 12 is programmed to sample the audio signal of the microphone 4 and transmit it to a dedicated server on the internet. The server converts the audio to text, processes it, and returns audio streams in digital format to the second microprocessor 12. The second microprocessor 12 converts the audio stream received to analog format and plays it back on the loudspeakers 5.

Advantageously, a selector 36 is interposed between the display 3 and the first microprocessor 7 and can switch between the position indicated with the continuous line in Figure 2, in which the display 3 is connected to the first microprocessor 7 in order to play back the images originating from the external unit in door video phone mode, and the position indicated with the dashed line in Figure 2, in which the display 3 is connected to the second microprocessor 12 in order to receive and play back streams of images received from the internet in voice assistant mode.

As an alternative, the second microprocessor 12 could transmit the video file or image file to the first microprocessor 7, and the latter could be programmed to act as a selector.

In use, the monitor 1 according to the invention can be installed on a wall in a similar manner to any conventional video door phone monitor, thus solving the problems of space occupation and untidiness of conventional voice assistants, especially in the case of multiple installations.

In video door phone mode, the microphone 4 and the loudspeakers 5 are connected to the first microprocessor 7, the first diode 26r emits a steady red light, and the monitor 1 performs the typical functions of a video door phone system (incoming call, answer, conversation, main door and/or gate opening, ending the conversation, etc.).

By pressing the button 30 and keeping it pressed, the relay 28 switches to the voice assistant mode, the microphone 4 and the loudspeakers 5 are redirected to the second microprocessor 12, the first diode 26r is switched off, and the second diode 26g emits a steady or flashing green light on the command of the second microprocessor 12, so as to indicate to the user that the voice assistant mode is active.

Once the request from the user has been received, the second microprocessor 12 connects to the internet via the WLAN interface 24 and transmits the digital audio stream of the request to the server. The server will process the information received in the conventional manner described above.

The monitor 1 is therefore capable of performing all the operations common to conventional voice assistants. In particular, it is capable of receiving queries or instructions orally (for example, making bookings or purchases online, playing back audio files, etc.) and of answering accordingly.

At the same time, according to an important advantage of the present invention, when the monitor 1 operates in video door phone mode, audio transmission toward the internet is inhibited, with the microphone 18 being physically disconnected from the second microprocessor 12, so as to make the system invulnerable to computer hacking actions aimed at eavesdropping. Simultaneously, the red light of the LED 26 is activated, in order to indicate that the device is in door video phone mode.

The programming of the microprocessors for performing the operations described above will not be discussed in depth here, since it lies outside the aim and objects of the present invention and falls per se within the normal knowledge of the person skilled in the art.

A preferred embodiment of the invention has been described, but obviously the person skilled in the art may make various modifications and variations within the scope of the claims.

For example, the monitor according to the invention could implement modules for controlling respective "smart" systems or apparatuses in the house, for example heating systems, electronic locks and the like.

Furthermore, the monitor could be provided with two or more microphones in order to improve reception.

As already anticipated, moreover, the display could be of the touchscreen type so as to reduce or even eliminate the keypad.

It goes without saying that the signaling two-color LED can be replaced by other luminous or acoustic signaling systems, for example a pair of independent LEDs, a buzzer etc..

Obviously, the processing means, which in the embodiment described here comprise two separate microprocessors, could be merged into a single microprocessor.

Moreover, it is self-evident that the invention could equally be applied to an internal door phone unit without a display.

Last but not least, it is understood that for privacy purposes it is not necessary to disconnect the loudspeaker from the computer network, and it would be sufficient to exclude the microphone. Therefore, the scope of the invention should not be considered limited in this sense.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An internal unit for door phone or video door phone systems, which comprises at least one microphone (4) and at least one loudspeaker (5), which are connected to processing means (7, 12) which are provided with connection means (8) for communicating bidirectionally with an external unit of the system, **characterized in that** it further comprises
- a communication interface (24) for connection to a computer network;
- a switching device (28), which is functionally interposed between said microphone (4) and said processing means (7, 12), and which can be switched between a first position, in which said microphone (4) is physically disconnected from said communication interface (24) and is connected to said connection means (8) via said processing means (7, 12), and a second position, in which said microphone (4) is connected to said communication interface (24) via a respective amplifier (32) and said processing means (7, 12), said processing means (7, 12) further being programmed to sample the audio signal of the microphone (4), when the switching device (28) is in said second position, and to transmit it over said computer network via said communication interface (24) for subsequent processing, as well as to receive from said computer network audio streams in digital format, convert them to analog format, and play them back on said loudspeaker (5).

2. The internal unit according to claim 1, **characterized in that** said switching device comprises a relay (28).

3. The internal unit according to claim 1 or 2, **characterized in that** it further comprises signaling means (26) which are functionally connected to said switching device (28) for indicating whether it is in said first position or in said second position.

4. The internal unit according to claim 3, **characterized in that** said signaling means comprise a first light emitting diode (26r) which is adapted to be powered when said relay (28) is in said first position.

5. The internal unit according to claim 3 or 4, **characterized in that** said signaling means comprise a second light emitting diode (26g) which is adapted to be activated by said processing means (7, 12) when said relay (28) is in said second position.

6. The internal unit according to one of claims 3-5, **characterized in that** said signaling means comprise a two-color LED (26).

7. The internal unit according to one of claims 1-6, **characterized in that** said switching device (28) is functionally interposed between said loudspeaker (5) and said processing means (7, 12) so that, in said first position, it connects said loudspeaker (5) to said connection means (8) via said processing means (7, 12), whereas in said second position it connects said loudspeaker (5) to said communication interface (24) via a respective amplifier (34) and said processing means (7, 12).

8. The internal unit according to one of claims 1-7, **characterized in that** it comprises an auxiliary power supply block (9) which can be connected to a domestic power supply.

9. The internal unit according to one of claims 1-8, **characterized in that** it comprises a display (3) for displaying images acquired by the external unit of said door phone or video door phone system.

10. The internal unit according to claim 9, **characterized in that** it comprises selection means (36) adapted to selectively enable said display (3) to receive and to play back either said images acquired by the external unit, or streams of images in digital format received from said computer network.

11. The internal unit according to claim 10, **characterized in that** said processing means comprise a first microprocessor (7) which is connected to said external unit of the system via said connection means (8), and a second microprocessor (12) which is connected to said communication interface (24), and **in that** said selection means comprise a selector (36) which is functionally interposed between said display (3) and said first microprocessor (7) and second microprocessor (12).

12. The internal unit according to one of claims 1-11, **characterized in that** said processing means (7, 12) are programmed to switch said relay (28) to said second position when a user presses a button (30) and keeps it pressed.

13. The internal unit according to one of claims 1-11, **characterized in that** said processing means (7, 12) are programmed to switch said relay (28) to said second position when a button (30) is pressed, and to switch it again to said first position upon the subsequent pressing of said button (30), a protection timeout being further provided which is adapted to automatically switch said relay (28) to said first position after a preset time from the first pressing of the button (30).

## Patentansprüche

1. Eine interne Einheit für Türsprech- oder Videotürsprechanlagen, die mindestens ein Mikrofon (4) und mindestens einen Lautsprecher (5) umfasst, die mit Verarbeitungsmitteln (7, 12) verbunden sind, welche mit Verbindungsmitteln (8) zur bidirektionalen Kommunikation mit einer externen Einheit der Anlage ausgestattet sind; **dadurch gekennzeichnet, dass** sie weiter Folgendes umfasst:
- eine Kommunikationsschnittstelle (24) für den Anschluss an ein Computernetzwerk;
- eine Schaltvorrichtung (28), die funktionell zwischen dem Mikrofon (4) und den Verarbeitungsmitteln (7, 12) angeordnet ist und die zwischen einer ersten Position, in welcher das Mikrofon (4) physisch von der Kommunikationsschnittstelle (24) getrennt und über die Verarbeitungsmittel (7, 12) mit den Verbindungsmitteln (8) verbunden ist, und einer zweiten Position umgeschaltet werden kann, in welcher das Mikrofon (4) über einen entsprechenden Verstärker (32) und die Verarbeitungsmittel (7, 12) mit der Kommunikationsschnittstelle (24) verbunden ist; wobei die Verarbeitungsmittel (7, 12) weiter programmiert sind, um das Audiosignal des Mikrofons (4) abzutasten, wenn die Schaltvorrichtung (28) in der zweiten Position ist, und es zwecks Weiterverarbeitung über das Computernetzwerk über die Kommunikationsschnittstelle (24) zu senden; und um von dem Computernetzwerk Audiostreams in digitalem Format zu empfangen, sie in analoges Format umzuwandeln und über den Lautsprecher (5) abzuspielen.

2. Die interne Einheit gemäß Anspruch 1, **dadurch gekennzeichnet, dass** die Schaltvorrichtung ein Relais (28) umfasst.

3. Die interne Einheit gemäß Anspruch 1 oder 2, **dadurch gekennzeichnet, dass** sie weiter Signalmittel (26) umfasst, die funktionell mit der Schaltvorrichtung (28) verbunden sind, um anzuzeigen, ob sie sich in der ersten oder in der zweiten Position befindet.

4. Die interne Einheit gemäß Anspruch 3, **dadurch gekennzeichnet, dass** die Signalmittel eine erste Leuchtdiode (26r) umfassen, die ausgebildet ist, um mit Strom versorgt zu werden, wenn das Relais (28) in der ersten Position ist.

5. Die interne Einheit gemäß Anspruch 3 oder 4, **dadurch gekennzeichnet, dass** die Signalmittel eine zweite Leuchtdiode (26g) umfassen, die ausgebildet ist, um von den Verarbeitungsmitteln (7, 12) aktiviert zu werden, wenn das Relais (28) in der zweiten Position ist.

6. Die interne Einheit gemäß einem der Ansprüche 3-5, **dadurch gekennzeichnet, dass** die Signalmittel eine zweifarbige LED (26) umfassen.

7. Die interne Einheit gemäß einem der Ansprüche 1-6, **dadurch gekennzeichnet, dass** die Schaltvorrichtung (28) funktionell zwischen dem Lautsprecher (5) und den Verarbeitungsmitteln (7, 12) angeordnet ist, so dass sie in der ersten Position den Lautsprecher (5) über die Verarbeitungsmittel (7, 12) mit den Verbindungsmitteln (8) verbindet, während sie in der zweiten Position den Lautsprecher (5) über einen entsprechenden Verstärker (34) und die Verarbeitungsmittel (7, 12) mit der Kommunikationsschnittstelle (24) verbindet.

8. Die interne Einheit gemäß einem der Ansprüche 1-7, **dadurch gekennzeichnet, dass** sie einen zusätzlichen Stromversorgungsblock (9) umfasst, der an ein Stromnetz im Haus angeschlossen werden kann.

9. Die interne Einheit gemäß einem der Ansprüche 1-8, **dadurch gekennzeichnet, dass** sie einen Bildschirm (3) zur Anzeige von Bildern umfasst, die von der äußeren Einheit der Türsprech- oder Videotürsprechanlage aufgenommen werden.

10. Die interne Einheit gemäß Anspruch 9, **dadurch gekennzeichnet, dass** sie Auswahlmittel (36) umfasst, ausgebildet, um es dem Bildschirm (3) wahlweise zu ermöglichen, die von der äußeren Einheit aufgenommenen Bilder zu empfangen und abzuspielen, oder Streams von Bildern im Digitalformat, die von dem Computernetzwerk empfangen werden.

11. Die interne Einheit gemäß Anspruch 10, **dadurch gekennzeichnet, dass** die Verarbeitungsmittel einen ersten Mikroprozessor (7) umfassen, der über die Verbindungsmittel (8) mit der externen Einheit der Anlage verbunden ist, und einen zweiten Mikroprozessor (12), der mit der Kommunikationsschnittstelle (24) verbunden ist, und dadurch, dass die Auswahlmittel einen Selektor (36) umfassen, der funktionell zwischen dem Bildschirm (3) und dem ersten Mikroprozessor (7) und zweiten Mikroprozessor (12) angeordnet ist.

12. Die interne Einheit gemäß einem der Ansprüche 1-11, **dadurch gekennzeichnet, dass** die Verarbeitungsmittel (7, 12) programmiert sind, um das Relais (28) in die zweite Position umzuschalten, wenn ein Benutzer einen Knopf (30) drückt und gedrückt hält.

13. Die interne Einheit gemäß einem der Ansprüche 1-11, **dadurch gekennzeichnet, dass** die Verarbeitungsmittel (7, 12) programmiert sind, um das Relais (28) in die zweite Position umzuschalten, wenn ein Knopf (30) gedrückt wird, und bei erneutem Drücken des Knopfs (30) in die erste Position zurückzuschalten, wobei weiter eine Zeitabschaltung als Schutz bereitgestellt ist, die ausgebildet ist, um das Relais (28) nach einer vordefinierten Zeit ab dem ersten Drücken des Knopfs (30) automatisch in die erste Position umzuschalten.

## Revendications

1. Unité interne pour systèmes d'interphone ou de visiophone, laquelle comprend au moins un microphone (4) et au moins un haut-parleur (5), lesquels sont connectés à des moyens de traitement (7, 12) dotés de moyens de connexion (8) pour communiquer de manière bidirectionnelle avec une unité externe du système, **caractérisée en ce qu'**elle comprend en outre :
- une interface de communication (24) destinée à être connectée à un réseau informatique ;
- un dispositif de commutation (28), qui est fonctionnellement interposé entre ledit microphone (4) et lesdits moyens de traitement (7, 12), et qui peut être commuté entre une première position, dans laquelle ledit microphone (4) est physiquement déconnecté de ladite interface de communication (24) et est connecté auxdits moyens de connexion (8) par l'intermédiaire desdits moyens de traitement (7, 12), et une seconde position, dans laquelle ledit microphone (4) est connecté à ladite interface de communication (24) par l'intermédiaire d'un amplificateur respectif (32) et desdits moyens de traitement (7, 12), lesdits moyens de traitement (7, 12) étant en outre programmés pour échantillonner le signal audio du microphone (4), lorsque le dispositif de commutation (28) est dans ladite seconde position, et pour le transmettre sur ledit réseau informatique par l'intermédiaire de ladite interface de communication (24) en vue d'un traitement subséquent, ainsi que pour recevoir, en provenance dudit réseau informatique, des flux audio au format numérique, les convertir en format analogique et les restituer sur ledit haut-parleur (5).

2. Unité interne selon la revendication 1, **caractérisée en ce que** ledit dispositif de commutation comprend un relais (28).

3. Unité interne selon la revendication 1 ou 2, **caractérisée en ce qu'**elle comprend en outre des moyens de signalisation (26) qui sont fonctionnellement connectés audit dispositif de commutation (28) pour indiquer s'il est dans ladite première position ou dans ladite seconde position.

4. Unité interne selon la revendication 3, **caractérisée en ce que** lesdits moyens de signalisation comprennent une première diode électroluminescente (26r) qui est apte à être alimentée lorsque ledit relais (28) est dans ladite première position.

5. Unité interne selon la revendication 3 ou 4, **caractérisée en ce que** lesdits moyens de signalisation comprennent une seconde diode électroluminescente (26g) qui est apte à être activée par lesdits moyens de traitement (7, 12) lorsque ledit relais (28) est dans ladite seconde position.

6. Unité interne selon l'une quelconque des revendications 3 à 5, **caractérisée en ce que** lesdits moyens de signalisation comprennent une diode électroluminescente bicolore (26).

7. Unité interne selon l'une quelconque des revendications 1 à 6, **caractérisée en ce que** ledit dispositif de commutation (28) est fonctionnellement interposé entre ledit haut-parleur (5) et lesdits moyens de traitement (7, 12), de sorte que, dans ladite première position, il connecte ledit haut-parleur (5) auxdits moyens de connexion (8) par l'intermédiaire desdits moyens de traitement (7, 12), tandis que dans ladite seconde position, il connecte ledit haut-parleur (5) à ladite interface de communication (24) par l'intermédiaire d'un amplificateur respectif (34) et desdits moyens de traitement (7, 12).

8. Unité interne selon l'une quelconque des revendications 1 à 7, **caractérisée en ce qu'**elle comprend un bloc d'alimentation électrique auxiliaire (9) qui peut être connecté à une alimentation électrique domestique.

9. Unité interne selon l'une quelconque des revendications 1 à 8, **caractérisée en ce qu'**elle comprend un écran d'affichage (3) destiné à afficher des images acquises par l'unité externe dudit système d'interphone ou de visiophone.

10. Unité interne selon la revendication 9, **caractérisée en ce qu'**elle comprend des moyens de sélection (36) aptes à permettre sélectivement audit écran d'affichage (3) de recevoir et de restituer soit lesdites images acquises par l'unité externe, soit des flux d'images au format numérique reçus en provenance dudit réseau informatique.

11. Unité interne selon la revendication 10, **caractérisée en ce que** lesdits moyens de traitement comprennent un premier microprocesseur (7) qui est connecté à ladite unité externe du système par l'intermédiaire desdits moyens de connexion (8), et un second microprocesseur (12) qui est connecté à ladite interface de communication (24), et **en ce que** lesdits moyens de sélection comprennent un sélecteur (36) qui est fonctionnellement interposé entre ledit écran d'affichage (3) et ledit premier microprocesseur (7) et second microprocesseur (12).

12. Unité interne selon l'une quelconque des revendications 1 à 11, **caractérisée en ce que** lesdits moyens de traitement (7, 12) sont programmés pour commuter ledit relais (28) vers ladite seconde position lorsqu'un utilisateur appuie sur un bouton (30) et maintient ledit bouton enfoncé.

13. Unité interne selon l'une quelconque des revendications 1 à 11, **caractérisée en ce que** lesdits moyens de traitement (7, 12) sont programmés pour commuter ledit relais (28) vers ladite seconde position lors d'une pression sur un bouton (30), et pour le commuter à nouveau vers ladite première position lors d'une pression subséquente sur ledit bouton (30), une temporisation de protection étant en outre fournie, laquelle est apte à commuter automatiquement ledit relais (28) vers ladite première position après un délai prédéfini à partir de la première pression sur le bouton (30).
